# DEMANDE DE BREVET EUROPEEN

(11) **EP 2 163 466 A1**
(43) Date de publication de la demande: **17.03.2010**
(21) Numéro de dépôt: 09305852.7
(22) Date de dépôt: 15.09.2009
(51) Int. Cl.: B62K 15/00, F16B 7/22, F16C 11/10

(54) **Charnière intégrée pour vélo pliable**

(30) Priorité: 16.09.2008 FR 0856205
(71) Demandeur: Ciel & Vents, 17300 Rochefort (FR)
(72) Inventeur: Poupard, Philippe, 17730, PONT DES BANQUES (FR); Poupard, Thierry, 17330, PONT DES BANQUES (FR); Danton, Mathieu, 17870, LOIRE LES MARAIS (FR)
(74) Mandataire: Laget, Jean-Loup

(57) **Abrégé**

Charnière (1) comprenant un premier module (2) et un deuxième module (3) reliés l'un à l'autre de manière mobile en rotation autour d'un axe, la charnière comprenant au moins un levier (18) et au moins une butée (13) aptes à coopérer afin de maintenir le premier module et le deuxième module dans une première position l'un par rapport à l'autre, caractérisée par le fait que, dans ladite première position, ledit au moins un levier et ladite au moins une butée sont agencés à l'intérieur d'une enveloppe qui comprend une paroi latérale (10) du premier module (2) et une paroi latérale (15) du deuxième module (3).

## Description

### Domaine technique de l'invention

La présente invention se rapporte à une charnière. En particulier, la présente invention se rapporte à une charnière peu encombrante, pour vélo pliable.

### Etat de la technique

Dans le domaine des vélos pliables, il est connu de relier deux éléments structurels du vélo par une charnière. Il peut s'agir par exemple d'une charnière reliant deux parties du cadre du vélo, ou d'une charnière reliant le tube de potence de guidon au cadre.

Une charnière de ce type comprend un mécanisme de verrouillage apte à maintenir par exemple le tube de potence dans son état déplié, permettant de rouler avec le vélo. Le mécanisme de verrouillage peut être déverrouillé pour permettre de plier le tube de potence vers le cadre, permettant le stockage ou le transport du vélo.

Un mécanisme de verrouillage typiquement utilisé comprend un levier relié au cadre, et une fente délimitée par deux pattes sur le tube de potence. Quand le tube de potence est déplié, le levier et la fente sont agencés du côté opposé du tube de potence par rapport à l'axe de pivotement. En basculant le levier, une partie du levier peut être insérée dans la fente en butée contre les pattes et ainsi maintenir le tube de potence dans son état déplié.

Un inconvénient de ce type de mécanisme de verrouillage est que le levier et les deux pattes limitant la fente dépassent du profil du cadre et du tube de potence. Leur encombrement peut donc gêner la manipulation du vélo. De plus, ils sont susceptibles d'être endommagés suite à un choc.

### Résumé de l'invention

Un problème que la présente invention propose de résoudre est de fournir une charnière qui ne présente pas au moins certains des inconvénients précités de l'art antérieur.

La solution proposée par l'invention est une charnière comprenant un premier module et un deuxième module reliés l'un à l'autre de manière mobile en rotation autour d'un axe, la charnière comprenant au moins un levier et au moins une butée aptes à coopérer afin de maintenir le premier module et le deuxième module dans une première position l'un par rapport à l'autre, caractérisée par le fait que, dans ladite première position, ledit au moins un levier et ladite au moins une butée sont agencés à l'intérieur d'une enveloppe qui comprend une paroi latérale du premier module et une paroi latérale du deuxième module.

Grâce à ces caractéristiques, le levier et la butée n'encombrent pas la charnière à l'extérieur de l'enveloppe. De plus, ils sont protégés contre les chocs. La charnière peut être qualifiée de charnière à verrouillage intégré. Des variantes préférées sont mentionnées ci-dessous.

De plus, le levier présente une position verrouillée dans laquelle il coopère avec ladite butée et une position déverrouillée dans laquelle un pivotement relatif desdits modules est autorisé, la charnière comprenant un élément de sollicitation élastique sollicitant le levier dans sa position déverrouillée et une came apte à coopérer avec le levier pour le faire passer dans sa position verrouillée.

Avantageusement, la came est agencée à l'intérieur de ladite enveloppe, la charnière comprenant une poignée agencée à l'extérieur de ladite enveloppe et reliée à la came de manière qu'une action sur la poignée entraîne une rotation de la came.

La paroi latérale du deuxième module présente une forme de cylindre de révolution, la poignée présentant également une forme de cylindre de révolution et entourant ladite paroi latérale du deuxième module.

Comme la forme de la poignée correspond à celle du cylindre, elle n'introduit pas un encombrement gênant.

La came présente une forme qui convertit une rotation de la came en un déplacement du levier avec un rapport entre la vitesse de déplacement du levier et l'angle de rotation de la came qui est le plus élevé au début depuis ladite position déverrouillée.

Cela permet de rapidement maintenir les modules dans leur première position, puis d'augmenter progressivement la force de serrage.

La poignée est reliée à la came par l'intermédiaire d'un rocher présentant une zone dentée apte à coopérer avec une zone dentée d'une crémaillère pour empêcher la rotation de la poignée.

La charnière selon l'invention comprend également un bouton apte à déplacer le rocher afin de séparer les zones dentées et permettre une rotation de la poignée ; la butée est fixée de manière amovible au premier module.

En cas d'usure, la butée peut donc facilement être remplacée.

La charnière comprend deux leviers et deux butées, chaque levier étant apte à coopérer avec une desdites butées respective, l'une desdites butées étant adjacente à l'axe et l'autre desdites butées étant agencée à distance de l'axe Cette disposition permet de maintenir fermement les modules dans la première position.

L'un desdits modules présente une nervure, l'autre desdits modules présentant une rainure qui reçoit la nervure dans ladite première position.

La coopération entre la nervure et la rainure permet d'assurer un positionnement correct des modules.

La présente invention concerne un vélo pliable comprenant une charnière telle que décrite ci-dessus.

### Brève description des figures

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en perspective d'une charnière selon un mode de réalisation de l'invention, dans un état déplié,
- la figure 2 est une vue en perspective de la charnière de la figure 1, dans un état plié,
- la figure 3 est une vue en perspective de la base de la charnière de la figure 1,
- la figure 4 est une vue en perspective d'une partie du mécanisme de verrouillage de la charnière de la figure 1,
- la figure 5 est une vue en coupe de la charnière de la figure 1,
- les figures 6, 7 et 8 représente la coopération entre la came et les leviers de la charnière de la figure 1,
- la figure 9 est une vue similaire à la figure 4, avec des pièces supplémentaires,
- la figure 10 représente le rocher du mécanisme de verrouillage de la charnière de la figure 1,
- les figures 11 et 12 sont des vues, respectivement en perspective et en coupe, du mécanisme de verrouillage de la charnière de la figure 1.

### Description détaillée d'un mode de réalisation de l'invention

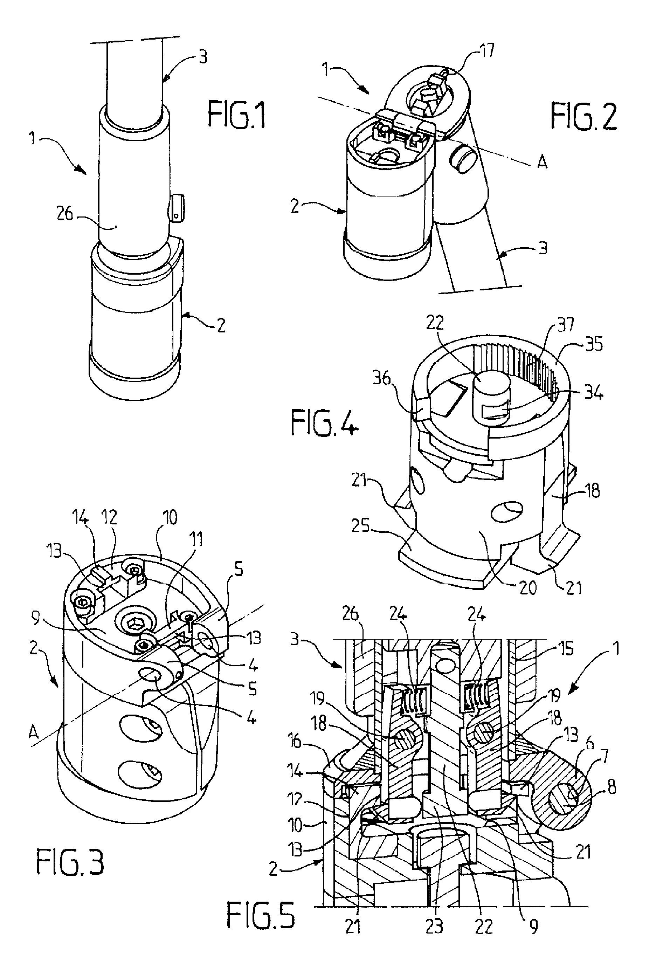

La charnière 1 représentée sur la figure 1 comprend une base 2 et un tube 3, reliés de manière mobile en rotation autour d'un axe A. A cet effet, la base 2 comprend deux yeux 5 percés d'orifices 4, et le tube 3 comprend un oeil 6 percé d'un orifice 7. L'oeil 6 est agencé entre les deux yeux 5, les orifices 4 et 6 étant alignés selon l'axe A et traversés par une broche 8. Ainsi, la charnière peut prendre un état déplié, représenté sur la figure 1, et un état plié représenté sur la figure 2.

Dans une application de la charnière 1, le tube 3 est le tube de potence d'un vélo pliable, portant le guidon, et la base 2 est fixée au cadre du vélo. D'autres applications de la charnière 1 sont envisageables.

La base 2 présente une face supérieure 9 et une paroi latérale 10 qui s'étend au-delà de la face supérieure 9, délimitant ainsi un espace supérieur. Dans cet espace, la base 2 comprend une accroche 11, adjacente aux yeux 5, et une accroche 12 agencée du côté opposé. Les accroches 11 et 12 comprennent chacune une entretoise 13 s'étendant à distance de la face supérieure 9. L'entretoise 13 de l'accroche 12 présente, sur le côté supérieur, une nervure 14. Les accroches 11 et 12 sont par exemple réalisées en acier pour en limiter l'usure. Comme il s'agit de pièces rapportées, elles peuvent facilement être remplacées en maintenance.

Le tube 3 présente un cylindre 15 de section circulaire et une base 16 en forme d'anneau plat, solidaire de l'oeil 6. Le cylindre 15 est fixé à la base 16 au niveau d'une extrémité tronconique.

La base 16 présente une rainure 17. Quand la charnière 1 est dans son état déplié, la nervure 14 est reçue dans la rainure 17, ce qui permet d'assurer un positionnement correct du tube 3 par rapport à la base 2.

La charnière 1 comprend également un mécanisme de verrouillage, qui permet, dans l'état déplié, de maintenir fermement le tube 3 et la base 2 en position l'un par rapport à l'autre. Le mécanisme de verrouillage peut être déverrouillé pour permettre de faire passer la charnière 1 dans son état plié. Ce mécanisme de verrouillage est décrit ci-dessous.

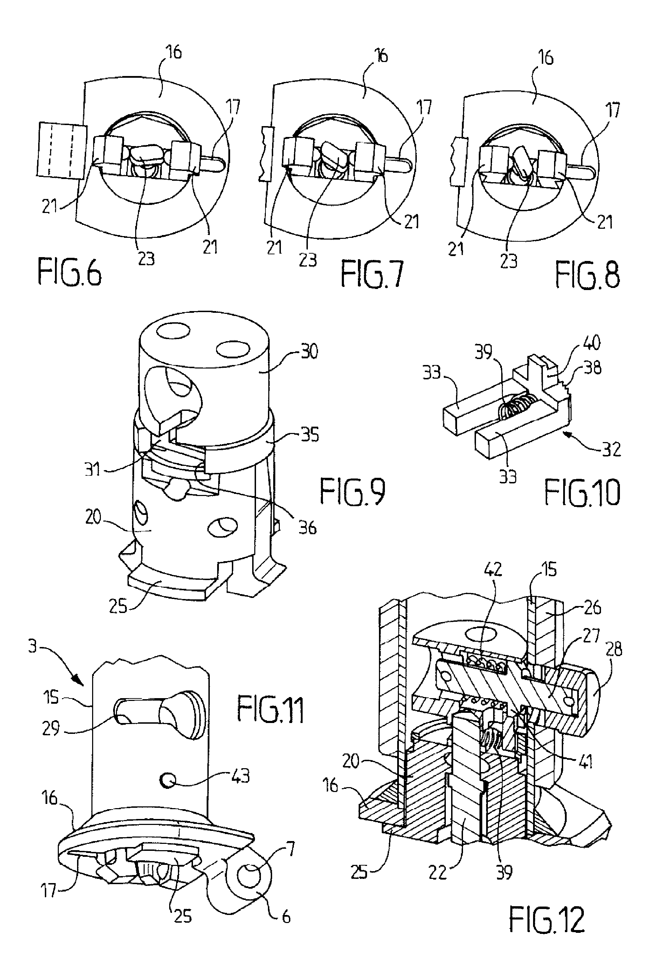

On voit sur la figure 4 une chape 20, sensiblement en forme de cylindre de révolution. Deux leviers 18 sont fixés à la chape 20, dans des positions diamétralement opposées. Chaque levier 18 peut tourner autour d'un plot 19 relié à la chape. Chaque levier 18 présente une tête de levier 21. Du côté opposé aux têtes de levier 21, des ressorts 24 sollicitent les leviers 18 dans une position déverrouillée, représentée par exemple sur les figures 8 et 11.

Comme on peut le voir notamment sur les figures 5, 11 et 12, la chape 20 est insérée dans le tube 3, avec ses pattes 25 en butée sur la base 16. Les leviers 18 s'étendent au-delà des pattes 25. Ainsi, lorsque la charnière 1 est dans son état déplié, les têtes de levier 21 se trouvent dans l'espace supérieur de la base 2, au niveau des accroches 11 et 12.

Lorsque les leviers 18 sont dans leur position déverrouillée, la base 2 et le tube 3 peuvent passer librement de leur état déplié à leur état plié et inversement. Les leviers 18 peuvent aussi prendre une position verrouillée, représentée par exemple sur les figures 5 et 6. On peut voir sur la figure 5 que quand les leviers 18 sont dans leur position verrouillée, la charnière 1 étant dans son état déplié, alors les têtes de levier 21 sont insérées sous les accroches 11 et 12 respectivement, en contact avec les entretoises 13. Dans cette configuration, la coopération des têtes de levier 21 et des entretoises 13 empêche la charnière 1 de passer dans son état plié. La base 2 et le tube 3 sont fermement maintenus en place l'un par rapport à l'autre.

Comme dit précédemment, les leviers 18 sont sollicités dans leur position déverrouillée par les ressorts 24. Le mécanisme de verrouillage comprend un mécanisme de commande permettant de faire passer les leviers 18 dans leur position verrouillée. Ce mécanisme de commande est décrit ci-dessous.

On peut voir sur les figures 4 et 5 notamment une came 22, montée à rotation dans la chape 20. La came 22 comprend une tête de came 23 agencée au niveau des têtes de levier 21 et coopérant avec celles-ci. La coopération entre la tête de came 23 et les têtes de levier 21 est représentée sur les figures 6 à 8. Sur la figure 6, la tête de came 23 pousse sur les têtes de levier 21 et les éloigne l'une de l'autre, à l'encontre de l'action des ressorts 24. Sur la figure 8, la came 22 a tourné par rapport à la figure 6, et la tête de came 23 laisse les leviers 18 prendre leur position déverrouillée, sous l'action des ressorts 24. La figure 7 représente une situation intermédiaire.

Ainsi, la rotation de la came 22 permet de faire passer les leviers 18 de leur position déverrouillée à leur position verrouillée, et inversement. La forme de la tête de came 23 est choisie pour qu'une rotation de 70° soit suffisante et que, depuis la position déverrouillée, les premiers 20° de rotation déplacent rapidement les leviers 18 pour venir accoster les entretoises 13. Puis, le mouvement des leviers 18 est plus lent pour augmenter progressivement la force de serrage.

Une poignée 26 en forme de manchon cylindrique entoure le cylindre 15 et est mobile en rotation par rapport au cylindre 15. La poignée 26 est reliée à la came 22 par l'intermédiaire d'un axe 27, une commande 30, une chape de commande 31 et un rocher 32, de sorte que la rotation de la poignée 26 entraîne la rotation de la came 22. Par ailleurs, la chape 20 est fixée en rotation au cylindre 15 par une goupille 43. Ainsi, une rotation de la poignée 26 permet de faire tourner la came 22 et donc de faire passer les leviers 18 de leur position verrouillée à leur position déverrouillée et inversement.

La commande 30 est de forme sensiblement cylindrique et présente un orifice dans lequel l'axe 27 est reçu. L'axe 27 fait saillie hors du cylindre 15 par une ouverture 29 et porte un bouton 28 au niveau de la surface extérieure de la poignée 26.

La chape de commande 31 présente deux plots insérés dans la commande 30, et est donc solidaire en rotation de la commande 30. La chape de commande 31 comprend également deux faces disposées en regard de deux méplats 34 de la came 22. Le rocher 32 présente deux pattes 33 respectivement agencées de manière ajustée entre une face de la chape de commande 31 et un méplat 34. Ainsi, la rotation de la chape de commande 31 est transmise à la came 22 par le rocher 32.

Le rocher 32 comprend également une zone dentée 38.

Une crémaillère 35, en forme d'anneau, est fixée au-dessus de la chape 20, entourant la came 22, la chape de commande 31 et le rocher 32. La crémaillère 35 présente une ouverture 36 permettant, lors du montage, d'insérer le rocher 32. La crémaillère 35 présente également, sur sa face intérieure, une zone dentée 37 apte à coopérer avec la zone dentée 38 du rocher 32 pour empêcher la rotation de la came 22.

Plus précisément, un ressort 39 qui prend appui sur la came 22 pousse le rocher 32 en direction de la crémaillère 35, de manière à faire s'engrener les zones dentées 37 et 38. Ainsi, la coopération des zones dentées 37 et 38 empêche la rotation du rocher 32, et donc de la came 22 et de la poignée 26. En appuyant sur le bouton 28, l'utilisateur peut déplacer l'axe 27 à l'encontre de l'action d'un ressort 42. L'axe 27 présente une collerette 41 coopérant avec un ergot 40 du rocher 32. Ainsi, en déplaçant l'axe 27, l'utilisateur peut déplacer le rocher 32 à l'encontre de l'action du ressort 39 et séparer les zones dentées 37 et 38. La rotation de la poignée 26, du rocher 32 et de la came 22 devient alors possible. La plage de rotation est déterminée par l'angle selon lequel s'étend l'ouverture 29.

Le fonctionnement de la charnière 1 est le suivant. Dans l'état déplié représenté sur la figure 1, les têtes de levier 21 coopèrent avec les entretoises 13 et maintiennent fermement la base 2 et le tube 3 en position l'un par rapport à l'autre. Les têtes de levier 21 sont maintenues dans leur position verrouillée par la came 22, elle-même empêchée de tourner par le rocher 32 et la crémaillère 35. Pour passer à l'état plié représenté sur la figure 2, l'utilisateur appuie sur le bouton 28. Il libère ainsi le rocher 32 de la crémaillère 35, et peut faire tourner la poignée 26, et donc la came 22. Les leviers 18 pivotent alors jusqu'à se libérer des entretoises 13. Le tube 3 peut alors pivoter par rapport à la base 2.

Inversement, pour passer de l'état plié à l'état déplié, l'utilisateur fait pivoter le tube 3 par rapport à la base 2, puis, en appuyant sur le bouton 28, il fait tourner la poignée 26, ce qui a pour effet de faire passer les leviers 18 dans leur position verrouillée.

Il est remarquable que la plupart des éléments du mécanisme de verrouillage de la charnière 1 se trouvent à l'intérieur de l'enveloppe délimitée par la paroi latérale 10 de la base 2 et le cylindre 15 du tube 3. En effet, seuls la poignée 26, le bouton 26 et une partie de l'axe 27 se trouvent à l'extérieur. Comme la poignée 26 a une forme qui épouse celle du cylindre 15, elle n'est pas saillante et est donc peu encombrante. Les autres éléments sont protégés à l'intérieur de l'enveloppe, en particulier les leviers 18.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Charnière (1) comprenant un premier module (2) et un deuxième module (3) reliés l'un à l'autre de manière mobile en rotation autour d'un axe (A), la charnière comprenant au moins un levier (18) et au moins une butée (13) aptes à coopérer afin de maintenir le premier module et le deuxième module dans une première position l'un par rapport à l'autre, **caractérisée par le fait que**, dans ladite première position, ledit au moins un levier et ladite au moins une butée sont agencés à l'intérieur d'une enveloppe qui comprend une paroi latérale (10) du premier module (2) et une paroi latérale (15) du deuxième module (3).

2. Charnière selon la revendication 1, dans laquelle ledit levier présente une position verrouillée dans laquelle il coopère avec ladite butée et une position déverrouillée dans laquelle un pivotement relatif desdits modules est autorisé, la charnière comprenant un élément de sollicitation élastique (24) sollicitant le levier dans sa position déverrouillée et une came (22) apte à coopérer avec le levier pour le faire passer dans sa position verrouillée.

3. Charnière selon la revendication 2, dans laquelle ladite came est agencée à l'intérieur de ladite enveloppe, la charnière comprenant une poignée (26) agencée à l'extérieur de ladite enveloppe et reliée à la came de manière qu'une action sur la poignée entraîne une rotation de la came.

4. Charnière selon la revendication 3, dans laquelle ladite paroi latérale (15) du deuxième module présente une forme de cylindre de révolution, la poignée présentant également une forme de cylindre de révolution et entourant ladite paroi latérale (15) du deuxième module.

5. Charnière selon l'une des revendications 2 à 4, dans laquelle la came présente une forme qui convertit une rotation de la came en un déplacement du levier avec un rapport entre la vitesse de déplacement du levier et l'angle de rotation de la came qui est le plus élevé au début depuis ladite position déverrouillée.

6. Charnière selon l'une des revendications 3 à 5, dans laquelle la poignée est reliée à la came par l'intermédiaire d'un rocher (32) présentant une zone dentée (38) apte à coopérer avec une zone dentée (37) d'une crémaillère (35) pour empêcher la rotation de la poignée (26).

7. Charnière selon la revendication 6, comprenant un bouton apte à déplacer le rocher (32) afin de séparer les zones dentées (37, 38) et permettre une rotation de la poignée (26).

8. Charnière selon l'une des revendications précédentes, dans laquelle ladite butée est fixée de manière amovible au premier module.

9. Charnière selon l'une des revendications précédentes, comprenant deux leviers (18) et deux butées (13), chaque levier étant apte à coopérer avec une desdites butées respective, l'une desdites butées étant adjacente à l'axe (A) et l'autre desdites butées étant agencée à distance de l'axe (A).

10. Charnière selon l'une des revendications précédentes, dans laquelle l'un desdits modules présente une nervure (14), l'autre desdits modules présentant une rainure (17) qui reçoit la nervure dans ladite première position.

11. Vélo pliable comprenant une charnière selon l'une des revendications précédentes.
